(19) Europäisches Patentamt
European Patent Office
Office européen des brevets

(11) Veröffentlichungsnummer: **0 134 912**
**A2**

# (12) EUROPÄISCHE PATENTANMELDUNG

(21) Anmeldenummer: **84106410.8**

(22) Anmeldetag: **05.06.84**

(51) Int. Cl.[4]: **C 09 K 3/12**
C 08 J 5/24, C 08 L 83/04

(30) Priorität: **20.07.83 DE 3326151**

(43) Veröffentlichungstag der Anmeldung:
**27.03.85 Patentblatt 85/13**

(84) Benannte Vertragsstaaten:
**AT BE CH DE FR GB IT LI LU NL SE**

(71) Anmelder: **Weber & Wirth Chemische Fabrik GmbH & Co. KG**
**Binnerheide 26**
**D-5840 Schwerte(DE)**

(72) Erfinder: **Weber, Hans-Otto**
**Kückshauserstrasse 26**
**D-4600 Dortmund 30(DE)**

(74) Vertreter: **Reinhard, Skuhra, Weise**
**Leopoldstrasse 51**
**D-8000 München 40(DE)**

## (54) Chemisches Gemisch und Verfahren zur Reparatur von Auspuffanlagen.

(57) Es wird ein neues chemisches Gemisch der folgenden Zusammensetzung offenbart: 10-30 Gew.% Methylpolysiloxan, 5-20 Gew.% Natriumpolyphosphat, 1-6 Gew.% Borax, 10-40 Gew.% Xylol, 5-25 Gew.% $Al(OH)_3$, 1-6 Gew.% Aluminium. Dieses Gemisch kann vorteilhaft bei der Reparatur von Auspuffanlagen verwendet werden. Weiterhin wird ein Verfahren zur Reparatur von Auspuffanlagen unter Verwendung des neuen chemischen Gemischs und eines an sich bekannten Glasfasergewebebands offenbart.

EP 0 134 912 A2

REINHARD, KREUTZ & SKUHRA
PATENTANWÄLTE

0134912

Reinhard, Kreutz & Skuhra · Leopoldstraße 51 · D-8000 Munchen 40

DR. ERNST STURM (1951-1980)
DR. HORST REINHARD
DIPL.-ING. KARL JÜRGEN KREUTZ
DIPL.-ING. UDO SKUHRA

LEOPOLDSTRASSE 51
D-8000 MÜNCHEN 40

TELEFON : 089/334078
TELEX : 5212839 isar d
TELEGRAMM : ISARPATENT

Unser Zeichen/our ref. P1996 Dr.R./Hei

Ihr Zeichen/your ref.

Datum/date 5. Juni 1984

1 Anmelder: Weber & Wirth Chemische Fabrik GmbH & Co. KG
Binnerheide 26
5840 Schwerte

# Chemisches Gemisch und Verfahren zur Reparatur von Auspuffanlagen

Die vorliegende Erfindung betrifft ein neues chemisches Gemisch sowie ein Verfahren zur Reparatur von Auspuffanlagen.

Verfahren zur Reparatur von Auspuffanlagen sind bereits bekannt. Zum einen besteht die Möglichkeit, die schadhaften Stellen zu verschweißen. Zum anderen besteht die Möglichkeit, die schadhaften Stellen mittels einer Auspuff-Reparatur-Bandage zu reparieren. Derartige Auspuff-Reparatur-Bandagen bestehen nach dem Stande der Technik aus Asbestgewebe, das ca. 40 %ig in Natrium-Wasserglas und 30 %ig in Kalium-Wasserglas getränkt ist. Als Weichmacher dienen Glyzerin, Alkaliseifen, Naphthalinsulfonsäuresalze und Sulfitablauge. Als Korrosionsschutz werden tierische Leime und Methylcellulose eingesetzt.

Derartige Auspuff-Reparatur-Bandagen werden folgendermaßen eingesetzt: Die beschädigte Stelle wird gründlich von Schmutz und losem Rost gereinigt. Eine Hitzeschutzfolie wird auf die beschädigte Stelle gelegt. Die zu verwendende Bandage wird zur Verbesserung der Elastizität kurz in kaltes Wasser getaucht und dann jeweils mit einer Überlappung fest um die beschädigte Stelle, z.B. einen Schalldämpfer, gewickelt. Die Bandage muß dann mit Draht oder Band gesichert werden, bis sie durch die Wärme der Auspuffanlage erhärtet ist.

Die Verfahren nach dem Stande der Technik weisen folgende Nachteile auf:

Schweißen ist nur auf noch vorhandenem Trägermaterial möglich; bei stark korrodierten bzw. durchgerosteten Auspuffanlagen ist ein Schweißen nur bedingt möglich und außerdem nur von Fachleuten durchführbar. Durch Schweißen reparierte Auspuffanlagen halten nur wenige Fahrkilometer und führen kurzfristig zum Austausch der defekten Auspuffanlage.

Bei den vorstehend beschriebenen Auspuff-Reparatur-Bandagen erfüllen die Weichmacher nur während der Verarbeitung ihren Zweck. Nach der ersten Temperaturbelastung sprödet das Material aus, hebt sich vom Untergrund ab, platzt oder reißt und verliert somit seine eigentliche Schutzwirkung, nämlich das Abdichten der Schadensstellen. Ein weiterer Nachteil besteht in der umständlichen Verfahrensweise. Die Auspuff-Reparatur-Bandage kann nur vollflächig umwickelt werden, d.h., an unzugänglichen Stellen ist kein"Pflasterauftrag" möglich und muß zusätzlich durch einen Bindedraht umwickelt bzw. gesichert werden.

Eine Aufgabe der vorliegenden Erfindung ist es, ein neues chemisches Gemisch bereitzustellen, welches insbesondere zur Reparatur von Auspuff-Anlagen verwendbar ist. Eine weitere Aufgabe der Erfindung besteht darin, ein Verfahren unter Verwendung des vorstehend beschriebenen chemischen Gemisches zur Reparatur von Auspuffanlagen bereitzustellen, das die erwähnten Nachteile nicht aufweist.

Die erstgenannte Aufgabe wird durch ein chemisches Gemisch der folgenden Zusammensetzung gelöst:

10 - 30 Gew.% Methylpolysiloxan
5 - 20 Gew.% Natriumpolyphosphat
1 - 6 Gew.% Borax
10 - 40 Gew.% Xylol
5 - 25 Gew.% $Al(OH)_3$
1 - 6 Gew.% Aluminium

Vorzugsweise ist das Gemisch wie folgt zusammengesetzt:

15 - 27 Gew.% Methylpolysiloxan
12 - 16 Gew.% Natriumpolyphosphat
2 - 4 Gew.% Borax
15 - 38 Gew.% Xylol
12 - 18 Gew.% $Al(OH)_3$
2 - 6 Gew.% Aluminium

Hervorragende Ergebnisse werden mit einem Gemisch der folgenden Zusammensetzung erzielt:

25,714 Gew.% Methylpolysiloxan
14,117 Gew.% Natriumpolyphosphat
3,632 Gew.% Borax
35,238 Gew.% Xylol
16,537 Gew.% $Al(OH)_3$
4,762 Gew.% Aluminium

Das erfindungsgemäß verwendete Methylpolysiloxan weist die folgende durchschnittliche Summenformel auf:

$$(CH_3SiO_{1,5})_8 \cdot (C_6H_5SiO_{1,5}) \cdot ((CH_3)_2SiO)$$

Das erfindungsgemäß verwendete Natriumpolyphosphat hat die Formel Na $(PO_3)_n$, wobei n eine mittlere Kettenlänge von n = 30 - 33 bedeutet.

Erfindungsgemäß wird das chemische Gemisch wie folgt hergestellt: Zunächst wird die 50 %-ige Lösung von Methylpolysiloxan in Xylol vorgelegt. In diese Lösung wird Borax unter ständigem Rühren langsam zugegeben. Die Geschwindigkeit der Dissolverscheibe liegt zwischen 300 - 400 U/min. Natriumpolyphosphat und $Al(OH)_3$ werden getrennt abgewogen und nacheinander langsam zugegeben, wobei die Reihenfolge ohne Bedeutung ist. Die Drehzahl des Dissolvers ändert sich nicht. Der Dispergiervorgang der bisher zusammengeführten Stoffe beträgt 60 Minuten. Erst jetzt wird die mit Xylol angeteigte Aluminiumpaste hinzugegeben (die Paste angeteigt in Xylol wird fertig vom Hersteller geliefert). Bei unveränderter Drehzahl wird der Dispergiervorgang nun nach weiteren 10 Minuten abgeschlossen. Der Ansatz wird gut abgedeckt und bis zum Abfüllgebrauch stehengelassen. Kurz vor der Abfüllung wird die Mischung mit der verbliebenen Restmenge Xylol aus der Rezeptur auf die notwendige Konsistenz

zum Spritzen aus der Sprühdose innerhalb von ca. 25 Sekunden gebracht. Gemessen wird die Konsistenz in einem 50 ml DIN-Becher mit der Auslaufdüsengröße $Ak_4$ bei 21°C.

Das erfindungsgemäße Verfahren zur Reparatur von Auspuffanlagen ist durch folgende Verfahrensschritte gekennzeichnet:

a. Säubern der Schadensstelle der Auspuffanlage;
b. auf die gesäuberte Fläche wird das chemische Gemisch aufgetragen;
c. ein an sich bekanntes Glasfasergewebeband wird mehrmals um die Schadensstelle gewickelt, wobei nach jeder Umwicklung erneut das chemische Gemisch aufgetragen wird;
d. nach einer Trockenzeit von 1 bis 2 Stunden wird die Auspuffanlage durch normalen Fahrbetrieb erhitzt, wodurch die erforderliche Endstabilität erreicht wird.

Vorzugsweise wird das Gemisch mittels einer Sprühdose aufgetragen, die als Treibgas eine Mischung aus 90 Gew.% Difluordichlormethan und 10 Gew.% Monofluortrichlormethan enthält.

Das erfindungsgemäß verwendete Glasfasergewebeband ist vorzugsweise ein Band von 80 mm Breite und einem Gewicht von ca. 100 g/qm. Das Glasgewebeband ist vorzugsweise alkalifrei. Besonders bewährt hat sich ein Band, das ein Aluminium-Borsilikat-Glas enthält, wie es insbesondere zur Kunststoff-Verstärkung Verwendung findet. Derartige Gläser haben folgende Zusammensetzung

51 - 55 Gew.% $SiO_2$, 13 - 15 Gew.% $Al_2O_3$, 20 - 24 Gew.% CaO oder MgO, 6 - 9 Gew.% $B_2O_3$ und $K_2O$ bzw. $Na_2O$ $<$ 1 Gew.%.

Vorzugsweise wird das erfindungsgemäße Verfahren mittels eines Reparatur-Sets angewendet. Das Reparatur-Set besteht vorzugsweise aus einer Sprühdose, enthaltend das erfindungsgemäße chemische Gemisch, weiterhin dem feuerfesten Glasfasergewebeband und einem Kapillarrohr als Sprühdosenaufsatz zum Besprühen schwer zugänglicher Teile.

Die Anwendung des erfindungsgemäßen Verfahrens ist ungefährlich und problemlos. Es treten keine ätzenden Bestandteile mehr auf, wie dies z.B. bei den Bandagen nach dem Stande der Technik durch Verwendung von Natrium- oder Kalium-Wasserglas in Verbindung mit einer Asbestbandage der Fall ist.

Die Bestandteile des erfindungsgemäßen Gemischs sind nach Art und Gewicht derart ausgewählt, daß sie hervorragende Verschmelzungsresultate über einen großen Temperaturbereich und auch bei sehr hohen Temperaturbereichen ergeben. So erhöht z.B. das eingesetzte Aluminium die Temperaturbelastbarkeit auf ca. 600°C. Ein sogar darüberhinausgehender Temperaturbereich wird vom Natriumpolyphosphat abgedeckt, dessen Verschmelzungspunkt bei ca. 650°C liegt. Darüber hinaus wirkt das eingesetzte Borax als Flammschutzmittel.

Zum weiteren Nachweis der Schutzwirkung des erfindungsgemäßen Verfahrens wurde ein Salzsprühtest nach DIN 50 021 durchgeführt. Ein verrostetes, nur mit dem Glasgewebeband behandeltes Auspuffrohr zeigte nach 14-tägiger Behandlung keine Einwirkungen im Bereich des Gewebes. Dagegen war das Rohr im unbehandelten Bereich verrottet.

Weitere Vorteile der Erfindung ergeben sich aus der folgenden Beschreibung von Versuchen, die vom Staatlichen Materialprüfungsamt Nordrhein-Westfalen, Dortmund, durchgeführt wurden:

Verwendet wurde ein Reparatur-Set, bestehend aus einer Sprühdose, enthaltend das erfindungsgemäße chemische Gemisch und einem Glasfasergewebeband, wie vorstehend beschrieben.

Das verwendete Gemisch bestand aus
25,714 Gew.% Methylpolysiloxan
14,117 Gew.% Natriumpolyphosphat
3,632 Gew.% Borax
35,238 Gew.% Xylol
16,537 Gew.% $Al(OH)_3$
4,762 Gew.% Aluminium.

Die Spraydose enthielt als Treibgas eine Mischung aus 90 Gew.% $F_2Cl_2$ und 10 Gew.% $FCl_3$.

Folgende Untersuchungen wurden an ausgebesserten Rohrabschnitten und Stahlblechen durchgeführt:

1. Salzsprühtest nach DIN 50 021, 20 Tage
2. Kondenswasser-Wechselklima nach DIN 50 018, KFW 0,2 S, 20 Zyklen
3. Schlagprüfung an ausgebesserten Bereichen
4. Druckprüfung mit Preßluft
5. Wärmebeständigkeitsprüfung 250°C, 14 Tage
6. Kälte- Wärmetest (1 h - 20°C, 1 h 150°C), 20 Zyklen.

Für die Prüfungen wurden stark verrostete Auspuffrohre und Stahlbleche aus unlegiertem Stahl verwendet.

Die künstlich erzeugten Schadensstellen (Bohrungen von 15 mm Durchmesser) an den Rohrabschnitten wurden durch eine sogenannte Bandage (Umwickeln mit dem vorstehend beschriebenen Glasfasergewebeband und Einsprühen mit dem das erfindungsgemäße Gemisch enthaltenden Spray) an den Stahlblechen durch Auflegen des Glasfasergewebebandes und Einsprühen ausgebessert, wobei nach dem vorstehend beschriebenen erfindungsgemäßen Verfahren vorgegangen wurde.

Die an den verrosteten Auspuffrohrabschnitten und Stahlblechen vorhandenen Schadensbereiche wurden mit einer Drahtbürste von Schmutz und losem Rost gesäubert. Danach wurden die Spraydosen ca. 4 Minuten geschüttelt, um eine Homogenisierung des Sprays zu erreichen. Die gesäuberte Fläche wurde nun eingesprüht und etwa 2 Minuten antrocknen gelassen. Das Glasfasergewebe wurde bei den Auspuffrohren dreimal um die Schadensstelle gewickelt, wobei nach jeder Umwicklung das Glasfasergewebe eingesprüht wurde. An den Enden des Gewebes erfolgte eine Befestigung mittels eines dünnen Drahtes und abschließend erfolgte eine nochmalige Einsprühung der gesamten Fläche.

An den Stahlblechen erfolgte die Ausbesserung durch Auflegen des zugeschnittenen Glasfasergewebes auf die mit Drahtbürste gesäuberte und mit dem Spray eingesprühte Fläche, und anschließendem nochmaligen Übersprühen.

Nach einer Trockenzeit von etwa einer Stunde im Normalklima DIN 50 014 23/50-2 erfolgte eine Aushärtung in einem Umlufttrockenschrank bei 150 °C, über einen Zeitraum von 3 Stunden, um die Endstabilität zu erreichen.

1. Salzsprühtest

Der Salzsprühtest erfolgte gemäß DIN 50 021, Ausgabe Mai 1975 "Sprühnebelprüfungen mit verschiedenen Natriumchloridlösungen", SS DIN 50 021, über einen Zeitraum von 20 Tagen.

Ergebnis

Nach 20 Tagen Salzsprühnebelprüfung weisen die mit Glasfasergewebe und Auspuffspray ausgebesserten Bereiche keine Ablösungen, Risse, Abplatzungen oder sonstige Schäden auf. Die umliegenden Bereiche weisen durch die Salzsprühnebel-Einwirkung eine starke Verrostung auf.

2. Kondenswasser-Wechselklima mit $SO_2$

Die Prüfung wurde nach DIN 50 018, Ausgabe Mai 1978 "Beanspruchung im Kondenswasser-Wechselklima mit schwefeldioxidhaltiger Atmosphäre", KFW 0,2 S, über 20 Zyklen, durchgeführt.

Ergebnis

Nach 20 Zyklen weisen die an den Rohrabschnitten und Stahlblechen ausgebesserten Bereiche keine Schäden auf. Die umliegenden Bereiche weisen durch den Kondenswasser-Test mit schwefeldioxidhaltiger Atmosphäre stärkere Verrostungen auf.

3. Schlagprüfung nach DIN 51 155

Zur Ermittlung des Verhaltens bei mechanischer Beanspruchung durch Schlag, wurde eine Schlagprüfung nach DIN 51 155, Ausgabe November 1982 "Schlagversuch" mit einer maximal einstellbaren Federkraft von 90 Newton vorgenommen.

Das Schlagprüfgerät wurde sowohl über einem ausgebesserten Loch als auch an unmittelbar daneben liegenden Bereichen aufgesetzt und eine Schlagprüfung vorgenommen.

Ergebnis

Es konnten keine visuell erkennbaren Schäden festgestellt werden.

4. Druckprüfung mit Preßluft

Die bandagierten Rohrabschnitte und ausgebesserten Stahlbleche wurden nach dem Salzsprühtest, Kondenswasser-Wechselklima-Test und der Wärembeständigkeitsprüfung in einer Druckprüfanlage bei unterschiedlichen Drücken von 0,1 bis 1 bar Überdruck mittels Preßluft untersucht.

Durch ein geringfügiges Entweichen der Luft an den ausgebesserten Stellen, insbesondere bei höheren Drücken ab 0,5 bar, konnte jedoch ein konstanter Druck nicht aufrechterhalten werden.

Ablösungen, Abplatzungen oder andere Schäden konnten nicht beobachtet werden.

5. Wärmebeständigkeitsprüfung 250°C, 14 Tage

Die Probekörper wurden einer 14tägigen Wärembeanspruchung in einem Umlufttrockenschrank bei (250 ± 5) °C unterzogen.

Ergebnis

Nach 14 Tagen bei 250°C konnten keine Schäden an den ausgebesserten Bereichen festgestellt werden. Die umliegenden Bereiche weisen Ablösungen auf, da an diesen Stellen der lose sitzende Rost nicht entfernt wurde.

6. Kälte- Wärmetest (1 h - 20°C, 1 h 150°C)

Die Prüfung erfolgte in einem Cold-Check-Testgerät der Firma Vötsch über 20 Zyklen. Ein Zyklus bestand aus 1 Stunde bei -20°C anschließend sofort 1 Stunde bei 150°C.

Ergebnis

Nach Abschluß des Kälte- Wärmetests weisen die ausgebesserten Bereiche keine Schäden auf.

Die umliegenden Bereiche zeigen Ablösungen, da an diesen Stellen der lose sitzende Rost nicht entfernt wurde.

Zusammenfassende Beurteilung

Der für eine Wiederherstellung von Auspuffanlagen insbesondere für Kraftfahrzeuge zu verwendende "Auspuff-reparatur-Spray" in Verbindung mit einem Glasfasergewebe kann aufgrund der Laboruntersuchungen für eine Instandsetzung der Auspuffanlage als gut geeignet angesehen werden.

Die durch Korrosion verursachten Schäden (z.B. Löcher oder Risse) an den Auspuffanlagen können durch relativ geringen Zeitaufwand und ohne aufwendige Hilfsmittel durch das erfindungsgemäße Verfahren behoben werden und damit die Lebensdauer der Auspuffanlage wesentlich erhöht werden.

Die Ausbesserung der Auspuffanlage mittels des erfindungsgemäßen Verfahrens kann als schlagfest, korrosions-, wärme- und kältebeständig bezeichnet werden, wobei die ausgebesserten Bereiche eine bessere Korrosionsbeständigkeit aufweisen, als die angerosteten ungeschützten Bereiche der Auspuffanlage.

Bei den Druckversuchen konnten keine Ablösungen, Abplatzungen oder sonstige Schäden beobachtet werden. Die bei höheren Drücken (etwa ab 0,5 bar Überdruck) festgestellten geringen Undichtigkeiten dürften für den Anwendungszweck ohne Bedeutung sein, da innerhalb einer Auspuffanlage keine höheren Drücke durch die Auspuffgase zu erwarten sind.

# REINHARD, KREUTZ & SKUHRA
PATENTANWÄLTE

0134912

Reinhard, Kreutz & Skuhra · Leopoldstraße 51 · D-8000 München 40

DR. ERNST STURM (1951-1980)
DR. HORST REINHARD
DIPL.-ING. KARL JÜRGEN KREUTZ
DIPL.-ING. UDO SKUHRA

LEOPOLDSTRASSE 51
D-8000 MÜNCHEN 40

TELEFON : 0 89 / 33 40 78
TELEX : 5 21 28 39 isar d
TELEGRAMM : ISARPATENT

Unser Zeichen/our ref. P 1996 Dr.R./Hei
Ihr Zeichen/your ref.
Datum/date 5. Juni 1984

Anmelderin:
Weber & Wirth Chemische Fabrik GmbH + Co. KG
Binnerheide 26
5840 Schwerte (Ruhr) 1

## Patentansprüche

1. Gemisch gekennzeichnet durch folgende Zusammensetzung

| | | |
|---|---|---|
| 10 - 30 | Gew.% | Methylpolysiloxan |
| 5 - 20 | Gew.% | Natriumpolyphosphat |
| 1 - 6 | Gew.% | Borax |
| 10 - 40 | Gew.% | Xylol |
| 5 - 25 | Gew.% | $Al(OH)_3$ |
| 1 - 6 | Gew.% | Aluminium |

2. Gemisch nach Anspruch 1 gekennzeichnet durch die folgende Zusammensetzung
15 - 27 Gew.% Methylpolysiloxan
12 - 16 Gew.% Natriumpolyphosphat
2 - 4 Gew.% Borax
15 - 38 Gew.% Xylol
12 - 18 Gew.% $Al(OH)_3$
2 - 6 Gew.% Aluminium

3. Gemisch nach Anspruch 1 oder 2 gekennzeichnet durch die folgende Zusammensetzung
25,714 Gew.% Methylpolysiloxan
14,117 Gew.% Natriumpolyphosphat
3,632 Gew.% Borax
35,238 Gew.% Xylol
16,537 Gew.% $Al(OH)_3$
4,762 Gew.% Aluminium

4. Verfahren zur Herstellung des Gemischs nach einem der Ansprüche 1 bis 3, dadurch gekennzeichnet, daß eine 50 %-ige Lösung von Methylpolysiloxan in Xylol vorgelegt wird, dieser Lösung das Borax unter ständigem Rühren langsam zugegeben wird, dann Natriumpolyphosphat und $Al(OH)_3$ in beliebiger Reihenfolge unter Rühren langsam zugegeben werden, und Borax, Natriumpolyphosphat und $Al(OH)_3$ innerhalb von ca. 60 Minuten in der Xylol-Lösung durch Rühren dispergiert werden, dann das Aluminium in Form einer mit Xylol angeteigten Paste unter Rühren zugegeben wird, weitere 10 Minuten durch Rühren dispergiert wird, die erhaltene Mischung gut abgedeckt bis zum Abfüllgebrauch stehengelassen wird und schließlich kurz vor der Abfüllung die Mischung mit der verbliebenen Restmenge Xylol auf die erforderliche Konsistenz zum Spritzen aus der Sprühdose innerhalb von

ca. 20 Sekunden gebracht wird.

5. Verfahren zur Reparatur von Auspuffanlagen unter Verwendung des Gemischs nach einem der Ansprüche 1 bis 4, gekennzeichnet durch die folgenden Verfahrensschritte

a.) Säubern der Schadensstelle der Auspuffanlage;
b.) auf die gesäuberte Fläche wird das Gemisch aufgetragen;
c.) ein an sich bekanntes Glasfasergewebeband wird mehrmals um die Schadensstelle gewickelt, wobei nach jeder Umwicklung erneut das Gemisch aufgetragen wird;
d.) nach einer Trockenzeit von 1 bis 2 Stunden wird die Auspuffanlage durch normalen Fahrbetrieb erhitzt, wodurch die erforderliche Endstabilität erreicht wird.

6. Verfahren nach Anspruch 5, dadurch gekennzeichnet, daß das Gemisch mittels einer Sprühdose aufgetragen wird, die als Treibgas eine Mischung aus 90 Gew.% $F_2Cl_2$ und 10 Gew.% $FCl_3$ enthält.

7. Verwendung des Gemischs nach einem der Ansprüche 1 bis 3 zur Reparatur von Auspuffanlagen.